# EUROPÄISCHE PATENTSCHRIFT

(11) **EP 0 862 703 B1**
(45) Veröffentlichungstag und Bekanntmachung des Hinweises auf die Patenterteilung: **28.02.2001**
(21) Anmeldenummer: 96939910.4
(22) Anmeldetag: 22.11.1996
(51) Int. Cl.: F16D 65/12

(54) **REIBEINHEIT**
FRICTION UNIT
UNITE DE FRICTION

(30) Priorität: 24.11.1995 DE 19543799
(43) Veröffentlichungstag der Anmeldung: 09.09.1998
(73) Patentinhaber: Deutsches Zentrum für Luft- und Raumfahrt e.V., 53175 Bonn (DE)
(72) Erfinder: KRENKEL, Walter, D-71272 Renningen (DE); KOCHENDÖRFER, Richard, D-70619 Stuttgart (DE); KRAPF, Jürgen, D-70794 Bernhausen (DE)
(74) Vertreter: Grimm, Ekkehard
(86) Internationale Anmeldenummer: EP9605179
(87) Internationale Veröffentlichungsnummer: WO9720152

(56) Entgegenhaltungen:
- CH-A- 639 466
- DE-A- 4 322 231
- FR-A- 2 620 499
- GB-A- 1 433 090
- GB-A- 2 285 104
- JP-A- 58 013 237
- JP-A- 61 157 840
- US-A- 3 732 953
- US-A- 4 457 967

## Beschreibung

Die vorliegende Erfindung betrifft eine Reibeinheit gemäß dem Oberbegriff des Anspruchs 1.

Eine derartige Reibeinheit ist aus der FR-A-2 620 499 bekannt. Dieses Dokument offenbart eine Reibeinheit, die eine Reibfläche aus einem Material Carbon-Carbon aufweist. Beide Reibflächen 2, 2a sind mittels Bolzen 6 verbunden. Die Bolzen 6 selbst bestehen ebenfalls aus einem Carbon-Carbon-Material. Der Figur 2 dieser Druckschrift ist zu entnehmen, daß die Stirnfläche des Bolzens einen Teil der Reibfläche bildet.

Eine weitere Reibeinheit ist in der DE-A1 44 38 456 beschrieben. Diese Reibeinheit zeichnet sich durch einen Kernkörper und mindestens einen mit diesem fest verbundenen Reibkörper aus, wobei der Reibkörper mit dem Kernkörper auf einer der Reibfläche abgekehrten Seite verbunden ist. Die Verbindung beider Körper erfolgt über eine hoch temperaturbeständige Verbindungsschicht. Vorzugsweise ist die Verbindungsschicht im wesentlichen aus Siliziumkarbid gebildet. Ein wesentliches Problem bei solchen Bremsscheiben bzw. bei Bremsscheiben überhaupt ist dasjenige, ausreichend die auf der Reibfläche gebildete Wärme abzuführen. Aus diesem Grund weist der Kernkörper dieser Bremsscheibe Hohlräume auf, die ausreichend Kühlluft den Innenseiten der Reibkörper zuführen. Aufgrund dieser Kühlkanäle und Hohlräume wird eine große Oberfläche bereitgestellt, um Wärme an die Umgebungsluft abzuführen. Gemäß einer Ausführungsform sind zwei Reibkörper durch einen Kernkörper, der aus Stegen gebildet ist, auf Abstand gehalten, wobei zwischen den Stegen jeweils Hohlräume entstehen. Die Stege sind in Nuten auf der Innenfläche des jeweiligen Reibkörpers eingesetzt und mit dem Reibkörper fest verbunden.

Ausgehend von dem vorstehend angegebenen Stand der Technik liegt der vorliegenden Erfindung die Aufgabe zugrunde, eine Reibeinheit, insbesondere eine Bremsscheibe, derart weiterzubilden, daß die auf der Reibfläche entstehende Wärme im Vergleich zu den bekannten Maßnahmen, so wie sie vorstehend geschildert sind, effektiver abgeführt wird.

Diese Aufgabe wird bei einer Reibeinheit nach der Erfindung dadurch gelöst, daß der (die) Formkörper eine in Richtung der Flächennormalen höhere Wärmeleitung aufweist (aufweisen) als die Reibfläche selbst und aus massivem Kohlenstoff, monolitischer Keramik oder aus kohlenstoff-faserverstärktem Verbundwerkstoff bei dem mindestens 50% Kohlenstoff-Fasern des Formkörpers in ihrer Längsrichtung so ausgerichtet sind, daß sie mit der Flächennormalen der Reibflächen einen Winkel ≤ 45° einschließen, gebildet ist (sind).

Mit diesen erfindungsgemäßen Maßnahmen, die zum einen darin liegen, daß die Formkörper bis an die Oberfläche der Reibfläche des Reibkörpers reichen, zum anderen darin, daß die Formkörper eine bevorzugte Wärmetransportrichtung aufweisen und in Bezug auf diese Wärmetransportrichtung so ausgerichtet sind, daß diese Richtung im wesentlichen in Richtung der Flächennormalen der Reibfläche verläuft, wird über diese Formkörper, aufgrund eines definierten Wärmegradienten, sichergestellt, daß die in der Reibfläche entstehende Wärme definiert von dieser Fläche abgeführt wird und somit ein Wärmestau in der Reibfläche vermieden wird. Die Reibflächenbereiche, die nicht durch die jeweils in der Reibfläche endenden Formkörper gebildet sind, können in Bezug auf den Reibkoeffizienten optimiert werden, so daß die Bremsscheibe einerseits in diesen Bereichen eine gute Reibeigenschaft aufweist, zum anderen aber auch durch einen guten Abtransport der Wärme über die Formkörper gekennzeichnet ist. Gerade dieser schnelle Abtransport der Wärme ist wesentlich, da mit zunehmendem Temperaturanstieg an der Reiboberfläche die Reibeigenschaften der Reibeinheit stark herabgesetzt werden. Außerdem kann mit zunehmender Reibflächentemperatur der Verschleiß ansteigen, was durch die erfindungsgemäßen Maßnahmen gemindert werden kann. Von Vorteil ist hierbei der Einsatz eines zu dem Material des Reibkörpers artspezifischen oder artgleichen Materials sowie die Orientierung der Kohlenstoff-Fasern der Formkörper, im Gegensatz zu dem Aufbau des eigentlichen Reibkörpers, derart, daß mindestens 50% dieser Kohlenstoff-Fasern des Formkörpers in ihrer Längsrichtung zu der Oberfläche des Reibkörpers hin so ausgerichtet sind, daß deren Längsachsen und die Flächennormalen der Reibfläche einen Winkel ≤ 45° einschließen; die Kohlenstoff-Fasern im Reibkörper sollten dagegen bevorzugt im wesentlichen parallel zur Reibfläche verlaufen.

Bevorzugt beträgt der Winkel zwischen den Flächennormalen und der Längsachse der Fasern des Formkörpers < 30°, noch bevorzugter maximal 10°; im Idealfalle würden diese Fasern senkrecht zur Reiboberfläche oder parallel zu den Flächennormalen der Reibfläche enden. Der Anteil solcher senkrecht zur Oberfläche bzw. in Richtung der Flächennormalen verlaufenden Fasern sollte hierbei mehr als 75% betragen; vorzugsweise liegt dieser Anteil bei über 90%. Im Idealkörper werden der oder die Formkörper durch Faserbündel gebildet, deren Fasern zueinander parallel ausgerichtet sind und in Richtung der Flächennormalen, zumindest im Oberflächenbereich der Reibfläche, verlaufend orientiert sind.

Um ein stabiles Gefüge mit einer guten Wärmeableitung zu erhalten, sollte der Formkörper den Reibkörper in seiner gesamten Dicke durchdringen. Es sollte eine Vielzahl von Formkörpern vorgesehen sein, die, wie vorstehend beschrieben, in den Reibkörper integriert sind. Diese einzelnen Formkörper werden zueinander gleichmäßig beabstandet, so daß jeweils zwischen den Flächen der Formkörper, die in der Reibfläche enden, ein ausreichender Bereich der Oberfläche der Reibeinheit mit den entsprechenden Reibeigenschaften verbleibt. In einer solchen Anordnung der Formkörper sind bolzenartig aufgebaute Formkörper bevorzugt, die mit einer Stirnfläche jeweils in der Reibfläche enden. Bevorzugt sollte die Summe der in der Reibfläche endenden Stirnflächen der einzelnen Formkörper zwischen 30 und 50% der Gesamtfläche der Reibfläche der Reibeinheit ausmachen. Für den Durchmesser der Bolzen bzw. für den Durchmesser der in der Reibfläche endenden Stirnflächen der Formkörper werden Durchmesser von 10 bis 20 mm, bevorzugt zwischen 12 und 14 mm, gewählt.

Je nach Aufbau und Einsatzart der Reibeinheit können die Formkörper bolzenartig ausgebildet sein und über die jeweilige Reibfläche bzw. den Reibkörper hervorstehen, was für die Kühlung einen zusätzlichen Vorteil dahingehend hat, daß die freie Oberfläche des Formkörpers durch diesen über die Reibfläche vorstehenden Bereich erhöht wird.

Die bolzenartigen Formkörper können sich von der Reibfläche aus zu der der Reibfläche gegenüberliegenden Fläche hin verjüngen. Dies bedeutet, daß solche Formkörper, von der Reibfläche aus gesehen, in sich verjüngende Öffnung eingesetzt sind. Ein solcher Aufbau hat unter anderem den Vorteil, daß die Formkörper in dem Reibkörper auch unter hoher Wärmeeinwirkung klemmend durch den sich verjüngenden, beispielsweise konischen Querschnitt gehalten werden. In Bezug auf den abgestuften Querschnitt, ob er sich nun erweitert oder verjüngt, können Schulter- oder Anschlagflächen gebildet werden, die jeweils eine sichere Lage und Orientierung des Formkörpers und des Reibkörpers zueinander gewährleisten. Aus fertigungstechnischer Sicht sollten die Formkörper einen etwa kreisförmigen Querschnitt aufweisen. In einem solchen Querschnitt können Faserbündel kompakt zusammengefaßt werden, mit einer gleichmäßigen, radial verteilten Orientierung.

Wie bereits vorstehend angegeben ist, sind Formkörper der Art bevorzugt, die eine Schulter- oder Anschlagfläche aufweisen. Mit so aufgebauten Formkörpern können zwei Reibkörper mit Abstand zueinander orientiert werden, sodaß der Schulterbereich der Formkörper in Bezug auf den jeweiligen Reibkörper, den sie halten, als Anschlagfläche zum Anlegen an der der Reibfläche gegenüberliegenden Rückseite des Reibkörpers dient. Der Bereich bzw. der Hohlraum zwischen den zwei durch die Formkörper auf Abstand gehaltenen Reibkörpern kann dazu genutzt werden, unter Drehung der Reibeinheit, in den Hohlräumen eine starke Luftzirkulation zu erzeugen, um unmittelbar den mittleren, zwischen den beiden Reibkörpern freiliegenden Bereich der Formkörper zu umströmen und dort die Wärme abzuführen.

Um den Wärmetransport zu der Oberfläche der Formkörper, die in dem mittleren Bereich der jeweiligen Formkörper, der zwischen den beiden auf Abstand gehaltenen Reibkörpern frei liegt, zu fördern, sind die Kohlenstoff-Fasern in diesem Bereich derart ausgerichtet, daß sie im wesentlichen in einer Ebene senkrecht zur Faserlängsrichtung der an die Reibfläche angrenzenden Faserschicht verlaufen und somit senkrecht einer Kühlströmung verlaufend ausgerichtet sind. Die Ausrichtung der Fasem wird demzufolge von der Reiboberfläche zu der freien Oberfläche des mittleren Bereichs der Formkörper hin definiert so umorientiert, daß eine optimale Wärmeableitung erzielt werden kann, und zwar unter Ausnutzung einer Vorzugsrichtung des Wärmetransports in Längsrichtung der Fasern. Bei einer innenbelüfteten Bremsscheibe kann von gleichmäßigen Beabstandungen der Formkörper abgesehen werden, wobei die Formkörper dann auch so angeordnet werden können, daß sie die Wände von Kühlkanälen bilden.

Im Bereich des Zwischenraums zwischen zwei Reibeinheiten, die unter einem definierten Abstand zueinander beabstandet sind, beispielsweise durch die erfindungsgemäßen Formkörper, können weitere Formkörper eingefügt werden, die von der Reibfläche aus in diesen Zwischenraum hinein vorstehen. Solche Formkörper dienen vorzugsweise zur Abführung der Wärme von der Reiboberfläche. Sie können geeignet in der Länge dimensioniert und darüberhinaus als Hohlkörper ausgebildet sein, wobei darauf geachtet werden sollte, daß im Bereich der Reibfläche die Fasern im wesentlichen senkrecht zu der Reibfläche verlaufen, während sie im Bereich des freien, in den Zwischenraum hineinstehenden Endes in Richtung der Kühlluftströmung, die den Formkörper anströmt, orientiert werden, um geeignet die Wärme abzuführen.

Die erfindungsgemäßen Formkörper können auch eine bevorzugte Anwendung als Halteteile oder Krafteinleitungselemente der Reibeinheit finden.

Falls die Formkörper einen ausreichenden Querschnitt aufweisen, können sie auf der der Reibfläche abgewandten Seite einen oder mehrere Hohlräume aufweisen, um die freie Oberfläche für die Wärmeabfuhr zu erhöhen. Sie können auch rohr- oder hülsenförmig ausgebildet werden mit einer Öffnung im wesentlichen senkrecht zu der Reibfläche.

Um die Wärmeleitfähigkeit der Formkörper weiter zu erhöhen, wird in dem Formkörper Metall eingelegt. Solche Metallteile, beispielsweise dünne Metallspäne oder Metalldrähte oder -fasern, werden so ausgerichtet, daß sie sich senkrecht zur Reibfläche in den Formkörper hinein erstrecken. In Verbindung mit der bevorzugten Orientierung der Kohlenstoff-Fasern ist diese Metalleinlage parallel zu den Fasern ausgerichtet.

Alternativ zu der Metalleinlage, oder zusätzlich dazu, werden zur Erhöhung der bevorzugten Wärmeleitung, mindestens 50% der Kohlenstoff-Fasern des Formkörpers mit einer höheren Wärmeleitfähigkeit ausgewählt als diejenige der Fasern, aus denen der Reibkörper aufgebaut ist. Als solche Fasern kommen Hoch-Modul-Fasern mit einem Zug-E-Modul größer als 300 GPa auf Polyacrylnitril-(PAN-) oder Pechbasis in Betracht.

Die erfindungsgemäße Reibeinheit wird bevorzugt aus einem Kohlenstoff-Faserkörper mit der jeweiligen, bevorzugten Orientierung der Fasern im Bereich des Reibkörpers und der Formkörper aufgebaut, wobei die Fasern des Reibkörpers und/oder des Formkörpers in einer weiteren, bevorzugten Ausbildung in Siliziumkarbid eingebettet werden. Dieses Siliziumkarbid wird während der Herstellung der Reibeinheit in Form von flüssigem Silizium in eine Mikrorißstruktur im Bereich des vorbereiteten Kohlenstoff-Fasergerüsts infiltriert und unter Wärmeeinwirkung mit freiem Kohlenstoff zu Siliziumkarbid umgewandelt. Auf diese Art und Weise ist es möglich, einen porösen Vorkörper als Rohling zu fertigen, der die jeweiligen Orientierungen der Reibkörper und der Formkörper in ihren Vorzugsrichtungen umfaßt, wonach dann die Einheit mit der Infiltration von Silizium und der Wärmebehandlung zu einem festen Verbundkörper fertiggestellt wird.

Bevorzugte Ausführungsformen der erfindungsgemäßen Reibeinheit sind in den Unteransprüchen angegeben.

Unter dem Begriff Reibeinheit, wie er hier verwendet wird, sind nicht nur Bremsscheiben und Bremsklötze zu verstehen, sondern auch Reibbeläge, die für Kupplungen, oder dergleichen, eingesetzt werden.

Weitere Einzelheiten und Merkmale der Erfindung ergeben sich aus der nachfolgenden Beschreibung eines Ausführungsbeispiels anhand der Zeichnungen. In der Zeichnung zeigt
- Figur 1: eine perspektivische, schematische Darstellung einer Reibeinheit, wobei im Bereich der Reibfläche vier Formkörper enden,
- Figur 2: eine perspektivische Darstellung eines Formkörpers, wie er in Verbin dung mit der Reibeinheit der Figur 3 einsetzbar ist,
- Figur 3: einen Schnitt durch zwei Reibeinheiten, die mit einem Formkörper, wie er in Figur 2 dargestellt ist, zueinander auf Abstand gehalten sind,
- Figur 4: eine der Figur 3 entsprechende Darstellung, wobei der Formkörper zu den Reibflächen hin verjüngende Querschnittskonturen aufweist,
- Figur 5: einen Formkörper, der als Abstandsteil einsetzbar ist,
- Figur 6: schematisch einen Längsschnitt durch eine Reibeinheit mit einem einzelnen Reibkörper, wobei verschiedene darin eingebettete Formkörper im Schnitt gezeigt sind,
- Figur 7: einen der Figur 3 entsprechenden Schnitt durch zwei Reibeinheiten mit zwei Formkörpern, die die Reibeinheiten auf Distanz halten, sowie zusätzlichen Kühl-Formkörpern, die von der Reibfläche in den Zwischenraum hineinragen,
- Figur 8: eine mit der Figur 6 vergleichbare Darstellung, wobei zwei Varianten von Formkörpern dargestellt sind, die jeweils über die Reibfläche vorstehen,
- Figuren 9A bis 12A: sowie die Figuren 9B bis 12B jeweils in einer stimseitigen Draufsicht sowie in einem Schnitt entsprechend der angegebenen Schnittlinien Formkörper mit schematisch dargestelltem Faserverlauf, um die erfindungsgemäßen Maßnahmen sowie verschiedene Variationsmöglichkeiten zu erläutern,
- Figur 13: eine Draufsicht einer erfindungsgemäßen, maßstäblichen Bremsscheibe, und
- Figur 14: einen Schnitt entlang der Schnittlinie XIII-XIII in Figur 13.

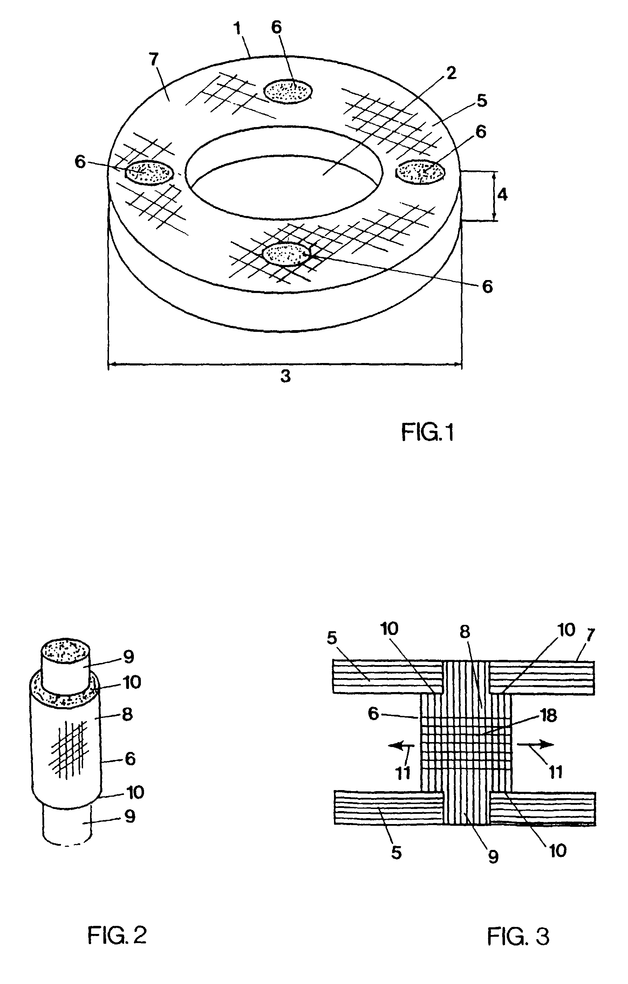

In Figur 1 ist schematisch eine Reibeinheit in Form einer Bremsscheibe 1 dargestellt, die ringförmig mit einer zentralen Öffnung 2 aufgebaut ist. Typischerweise weist eine solche Bremsscheibe einen Außendurchmesser 3 von ca. 300 bis 350 mm auf, während die Dicke 4 zwischen 8 und 15 mm beträgt.

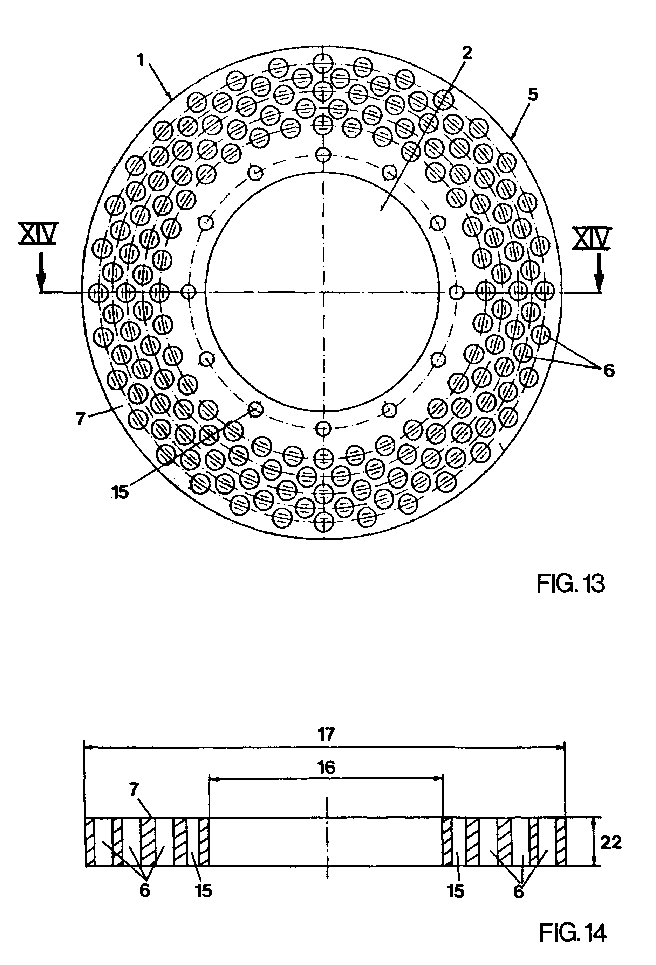

Die Bremsscheibe 1 umfaßt einen Reibkörper 5 aus kohlenstoff-faserverstärktem Verbundwerkstoff sowie verschiedene, bolzenartige Formkörper 6, die gleichmäßig um den Umfang der Bremsscheibe 1 herum verteilt in den Reibkörper 5 eingesetzt sind. Diese Formkörper 6 enden mit ihrer Stirnfläche in der Reibfläche 7 des Reibkörpers 5 und bilden einen Teil dieser Reibfläche, wie sie in Figur 1 zu erkennen ist. Diese Formkörper 6 reichen von der Oberseite des Reibkörpers 5, d.h. von der Reibfläche 7 aus, bis zu der der Reibfläche gegenüberliegenden Oberfläche des Reibkörpers 5. Die Formkörper, die in den gezeigten Beispielen aus Kohlefasem in ihrem Grundgerüst aufgebaut sind, dienen dazu, gezielt, durch eine bevorzugte Wärmetransportvorrichtung, Wärme, die auf der Reibfläche 7 beim Bremsen erzeugt wird, abzuführen. Hierzu ist den Formkörpern 6 eine bevorzugte Wärmeleitrichtung gegeben, und zwar dadurch, daß diese Formkörper, vorzugsweise Kohlenfasem in einem hohen Volumenprozentanteil enthaltend, so orientiert sind, daß im Bereich der Formkörper 6 eine Wärmesenke gebildet ist, und die Wärme gezielt über diese Formkörper 6 abgeführt wird. Während der Reibkörper 5, beispielsweise aus einem Kohlenfasergerüst hergestellt, in seiner Faserorientierung derart aufgebaut ist, daß er eine hohe Festigkeit besitzt, d.h. die Fasern verlaufen im wesentlichen parallel zur Reibfläche 7, sind die Fasern der bolzenartigen Formkörper 6 senkrecht zu der Reibfläche 7 verlaufend, d.h. im wesentlichen in Richtung der auf der Reibfläche 7 stehenden Flächennormalen. Es hat sich gezeigt, daß gerade eine solche definierte Faserorientierung in Richtung der Flächennormalen zu einem optimierten Abtransport der Wärme von der Reibfläche 7 führt. In Figur 1 sind zwar nur vier bolzenartige Formkörper 6 dargestellt, um den prinzipiellen Aufbau der Reibeinheit zu erläutern, allerdings ist für einen optimierten Aufbau einer Bremsscheibe eine Vielzahl von bolzenartigen Formkörpern 6 von Vorteil, wie dies in den Figuren 13 und 14 dargestellt ist, die nachfolgend noch erläutert werden.

Um eine Hochleistungs-Reibeinheit bzw. eine Hochleistungs-Bremsscheibe aufzubauen, werden zwei Reibkörper 5, wie sie prinzipiell in Figur 1 dargestellt sind, mit Abstand zueinander angeordnet, wie dies in Figur 3 gezeigt ist. Um die beiden Reibkörper 5 auf Abstand zu halten, können die bolzenartigen Formkörper 6 verwendet werden, die bereits anhand der Figur 1 erläutert wurden. In einer Ausführungsform, wie sie in den Figuren 2 und 3 dargestellt ist, ist ein Mittelteil 8, beispielsweise einer zylindrischen Form (Figur 2), mit sich verjüngenden Endabschnitten 9 derart gebildet, daß an der Übergangsstelle zwischen dem Mittelteil 8 und dem Endabschnitt 9 jeweils ein Schulterbereich 10 entsteht. An die jeweiligen Schulterbereiche 10 legt sich dann der obere und der untere Reibkörper 5 jeweils an, wie dies in Figur 3 dargestellt ist.

In der Figur 3 ist durch die Linien die Hauptfaserorientierung sowohl in den jeweiligen Reibkörpern 5 als auch in dem Formkörper 6 dargestellt. Während in den jeweiligen Endabschnitten 9 die Fasern senkrecht zu der Reibfläche 7 verlaufend enden, d.h. in Richtung der auf der Reibfläche 7 stehenden Flächennormalen, und diese Orientierung in den Mittelteil 8 des Formkörpers 6 hineinreicht, sind in der mittleren Zone die Fasern bevorzugt senkrecht zu dieser ersten Faserorientierung ausgerichtet, d.h. etwa parallel zu der Reibfläche 7, wie durch die entsprechende Schraffur 18 angedeutet ist. Aufgrund dieser Faserorientierung erfolgt ein bevorzugter Wärmefluß in Richtung der mit den Bezugszeichen 11 bezeichneten Pfeile, insbesondere auch dadurch, daß unter Drehung der Reibeinheit diese bolzenartigen Formkörper 6 durch Kühlluft angeströmt werden. Ein bevorzugter Aufbau einer solchen Reibeinheit ist dann gegeben, wenn sowohl die Reibkörper 5 als auch die bolzenartigen Formkörper 6 aus einem Kohlefasergerüst aufgebaut sind, unter Orientierung der Fasern insbesondere in dem Formkörper 6 so, wie dies vorstehend angegeben ist, wobei dieser Formkörper als Kohlenstoffasergerüst-Rohling hergestellt wird und mit flüssigem Silizium infiltriert wird, das sich dann, unter Wärmebehandlung, mit freiem Kohlenstoff zu Siliziumkarbid umwandelt. Nach der Keramisierung wird eine hochfeste Bremseinheit erzielt, die zum einen den Anforderungen als Hochleistungs-Bremseinheit gerecht wird, bei der gerade auf der Reibfläche 7 sehr hohe Temperaturen erzeugt werden, die aber andererseits einen extrem hohen Grad einer Wärmeabfuhr gerade durch die besonders ausgebildeten Formkörper 6 liefert. Für den Aufbau der Formkörper 6 werden vorzugsweise hoch wärmeleitende Fasern, wie sogenannte Hoch-Modul-Fasern eingesetzt, die durch eine Wärmeleitfähigkeit größer 20 W/mK gekennzeichnet sind. Die Fasern der Reibfläche bestehen bevorzugt aus hochfesten HT-(High Tenacity)-C-Fasern mit einem E-Modul < 300 GPa, die z.B. bidirektional als Gewebe vorliegen.

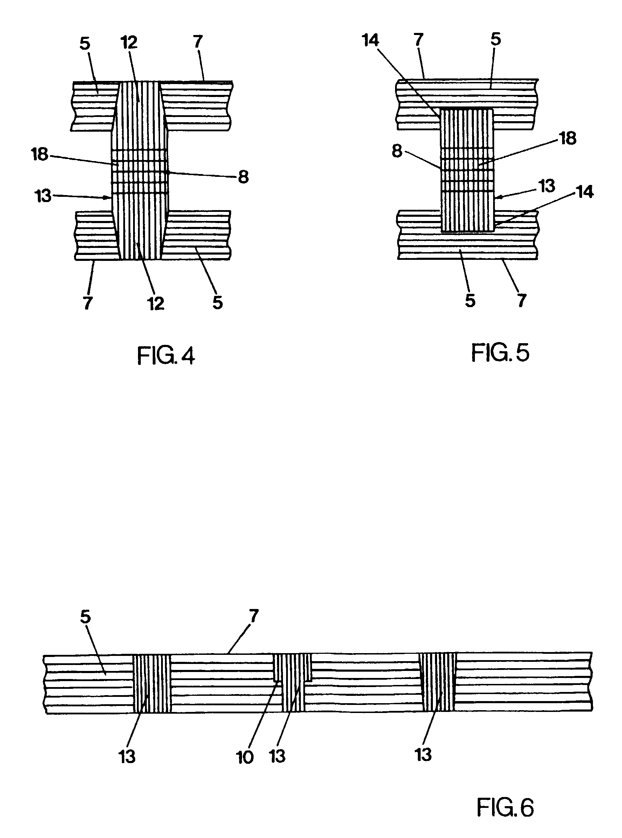

In Figur 4 ist ein Formkörper 13 gezeigt, der anstelle der sich stufenförmig verjüngenden Endabschnitte 9 des Formkörpers der Figur 3, einen sich zu seinen freien Enden hin, die in der Reibfläche 7 jeweils enden, einen sich konisch verjüngenden Abschnitt 12 besitzt, der sich in eine entsprechende, konische Ausnehmung in dem jeweiligen Reibkörper 5 einlegt. Auch mit dieser Anordung ist eine sichere Halterung der jeweiigen Formkörper 6 in den Reibkörpern 5 gewährleistet. Im Gegensatz zu dem Formkörper der Figur 3 hat der Formkörper 13 der Ausführungsform gemäß Figur 4 den Vorteil, daß der Übergang zwischen dem konischen Abschnitt 12 und dem Mittelteil 8 quasi-kontinuierlich erfolgt, d.h. es ist keine Sprungstelle in Form eines Schulterbereichs 10 vorhanden. Diese Anordnung hat den Vorteil, daß die Fasern in dem konischen Abschnitt 12 fortlaufend in das Mittelteil 8 übergehen und dort vorzugsweise so umorientiert werden, daß sie dann senkrecht zu der Orientierung im Bereich der konischen Abschnitte 12 verlaufen, wie dies auch anhand des Beispiels der Figur 3 erläutert wurde.

In Figur 5 ist ein Formkörper 13 gezeigt, der als zusätzliches Abstandsteil zwischen den beiden Reibkörpern 5 dient; dieser Formkörper 13 ist in entsprechende Vertiefungen oder Nuten 14 auf der der Reibfläche 7 gegenüberliegenden Seite der Reibkörper 5 eingesetzt. Auch bei einem solchen Formkörper 13 können die Fasern dann im Mittelteil 8 umorientiert werden (Schraffur 18), um die Fasern in Anströmrichtung der Kühlluft zu orientieren, entsprechend wiederum der Figur 3, um die Wärmeabflußrichtung bzw. den Wärmegradienten definiert zu beeinflussen.

Unter dem Begriff "umorientiert", wie er vorstehend und in der weiteren Beschreibung verwendet wird, ist zu verstehen, daß den Fasern der Formkörper 6, 13 eine geänderte, neu orientierte Vorzugsrichtung in Bezug auf die Wärmeleitung gegeben wird.

Die Formkörper 13, wie sie in den Figuren 4 und 5 dargestellt sind, können in der Querschnittsform in einem strömungsgünstigen Querschnittsprofil ausgebildet werden, vorzugsweise als in Strömungsrichtung der vorbeiströmenden Kühlluft bei der Drehung der Reibkörper 5 strömungsgünstiges Profil, so daß auch hohe Luftmengen über die abzukühlenden Oberflächen der Formkörper 13 geführt wird.

Während anhand der Figuren 2 bis 5 Anordnungen erläutert wurden, bei denen zwei Reibkörper 5 mittels der Formkörper 6, 13 zu einer doppelscheibigen Reibeinheit zusammengesetzt wurden, ist in Figur 6 ein Schnitt einer weiteren Reibeinheit bzw. eines Reibkörpers 5 schematisch dargestellt, der einer Bremsscheibe entspricht, wie sie in Figur 1 gezeigt ist.

Anhand der Figur 6 sind verschiedene Formkörper 13 gezeigt, die in entsprechende Bohrungen des Reibkörpers 5 eingesetzt sind. Der linke Formkörper 13 besitzt einen über seine Länge gleichbleibenden Querschnitt, wobei wiederum die Fasern, aus denen dieser Formkörper 13 aufgebaut ist, senkrecht zur Reibfläche 7 orientiert sind, d.h. in Richtung der Oberflächennormalen der Reibfläche 7. Der mittlere Formkörper 13 nach Figur 6 besitzt einen oberen und einen unteren Abschnitt mit einem Schulterbereich 10, mit dem er sich innerhalb des Reibkörpers 5 zusätzlich abstützt. Die rechte Darstellung eines Formkörpers 13 zeigt einen von der Reibfläche 7 zu der gegenüberliegenden Seite hin sich verjüngenden Konus, der, entsprechend dem mittleren Formkörper 13, den Vorteil besitzt, daß er sicher in dem Reibkörper 5 gehalten wird.

Die einzelnen Formkörper können nicht nur kreisförmige Querschnitte aufweisen, sondern die Querschnitte werden den jeweiligen Anforderungen angepaßt, jeweils unter Berücksichtigung der Faserorientierung in Bezug auf deren bevorzugte Wärmeleitung.

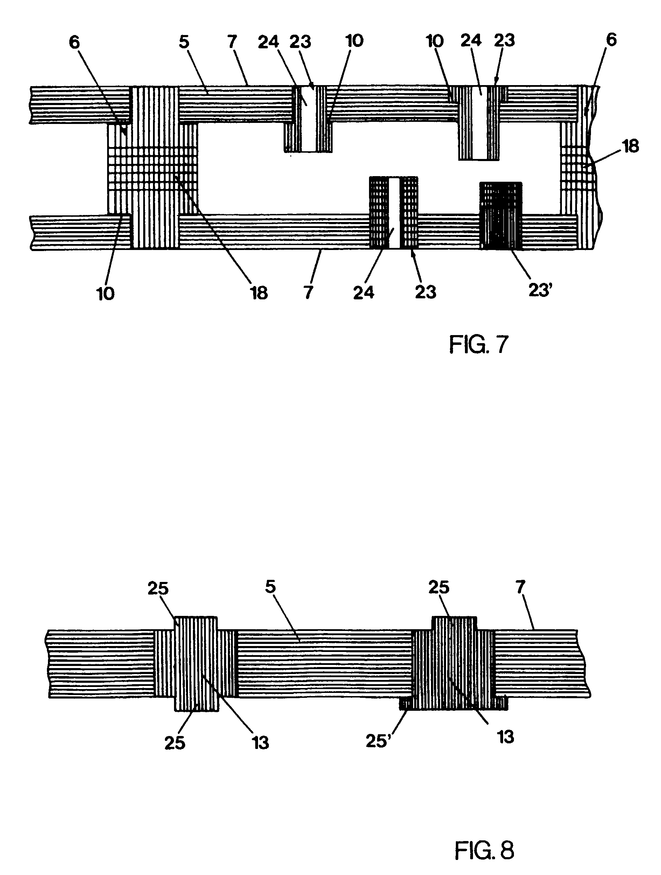

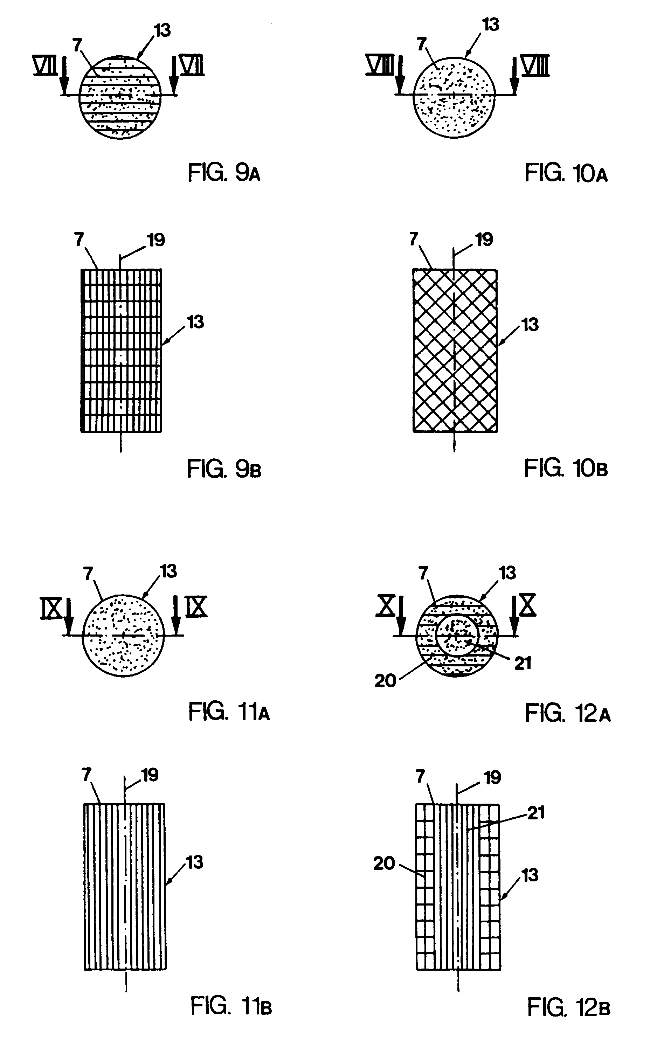

In Figur 7 ist eine Reibeinheit schematisch dargestellt, die der Figur 3 entspricht. In dieser Anordnung sind wiederum zwei Reibkörper 5 mittels Formkörper 6, die dem Formkörper der Figur 2 entsprechen, auf Abstand gehalten, so daß zwischen den beiden Reibkörpern 5 ein Zwischenraum gebildet ist. In der Anordnung der Figur 7 sind zwischen den beiden Formkörpern 6 weitere Kühl-Formkörper 23, 23' dargestellt, die nur einen bestimmten Abstand über die Unterseite der jeweiligen Reibkörper 5, in die sie eingesetzt sind, vorstehen. Diese Kühl-Formkörper 23, 23' dienen nur dazu, die Wärme von der Reibfläche 7 abzuführen, wobei wiederum deren Faserorientierung im wesentlichen senkrecht zu der Reibfläche 7 von Vorteil ist, um eine bevorzugte Wärmetransportrichtung zu erzielen. Darüberhinaus weist jeder der Kühl-Formkörper 23 eine Mittelbohrung 24 auf, die zum einen die Oberfläche des Kühl-Formkörpers 23 vergrößert, zum anderen Abriebmaterial von der Reibfläche 7 aufnehmen kann. Solche Kühl-Formkörper 23 können prinzipiell so aufgebaut werden, wie dies anhand der bereits beschriebenen Formkörper 6, 13 erläutert ist bzw. nachfolgend noch anhand der Figuren 9 bis 12 erläutert wird. Beispielsweise sind Schulterbereiche 10 vorgesehen, mit denen sich die Kühl-Formkörper 23 an den Reibkörpern 5 anlegen. Es besteht aber auch die Möglichkeit, diese Formkörper 23 als Bolzen bzw. Zylinderteile auszubilden, wie dies der Kühl-Formkörper 23 in Figur 7 im Bereich des unteren Reibkörpers 5 erläutert. Als weitere Variante ist der Formkörper 23' als massiver Formkörper dargestellt.

In der Figur 8 ist eine der Figur 6 entsprechende Darstellung eines Reibkörpers 5 gezeigt, in der bolzenförmige Formkörper 13, die im wesentlichen den Formkörpern 13 der Figur 6 entsprechen, eingesetzt sind. Zusätzlich ist allerdings ein sich verjüngender Fortsatz 25 vorgesehen, der über die Reibfläche 7 vorsteht. Mit einer solchen Anordnung kann ein zusätzlicher Kühleffekt erzielt werden. Dieser Fortsatz 25 kann nicht nur auf der Oberseite über den Reibkörper 5 vorstehen, wie dies anhand des rechten Formkörpers 13 gezeigt ist, sondern auch über die Unterseite des Reibkörpers 5, wie die linke Darstellung zeigt. Weiterhin weist der rechte Formkörper 13 der Figur 8 an dem unteren Ende einen sich erweiternden Fortsatz 25' auf, der an der Unterseitenfläche des Reibkörpers anliegt. Die Fortsätze 25 und 25', insbesondere die Fortsätze 25, die sich über die Reibfläche 7 hinaus verlängern, können als Halteteile oder als Krafteinleitungselemente eingesetzt werden, wozu entsprechende Befestigungsmittel in diesen Formkörpern 13 ausgebildet werden. Für solche Maßnahmen muß allerdings der Fortsatz nicht verjüngt sein, wie dies in der Figur 8 dargestellt ist, sondern es reicht ein geringes Überstehen über die Reibfläche 7 aus. Weiterhin kann das freie Ende solcher Fortsätze 25, 25' auch dazu dienen, die eigentliche Reibfläche zu bilden. Hierzu muß eine entsprechende Anzahl solcher Formkörper, die ein über die eigentliche Reibfläche 7, wie sie in Figur 8 dargestellt ist, vorstehende Stirnseite besitzen, vorgesehen werden. Gerade eine solche Maßnahme hat den Vorteil, daß zwischen der Oberseite der Reibeinheit 5 und dem auf diesen freien Stirnflächen auflegenden Gegenstück ein schmaler Spalt gebildet wird, in dem Kühlluft zirkuliert, was zusätzlich die Kühlung der Reibeinheit 5 erhöht.

In den Figuren 9 bis 12 sind verschiedene schematische Anordnungen von Formkörpern in Bolzform, d.h. mit etwa kreisförmigem Querschnitt, dargestellt, beispielsweise entsprechend dem linken Formkörper 13 der Figur 6.

In den Figuren 9A und 9B ist ein Formkörper 13 dargestellt, der aus einem zweidimensionalen Gewebe, das in einzelne Lagen, wie die Figur 9A zeigt, über den Querschnitt geschichtet, aufgebaut ist. Die Fasern laufen unter 0 Grad und 90 Grad zu der Längsachse, in den Figuren mit der strichpunktierten Linie 19, gekennzeichnet. Das Wesen dieses Formkörpers 13 ist darin zu sehen, daß eine Vorzugsrichtung der Kohlenstoff-Fasern in Richtung der Achse 19 verläuft, während ein etwa gleich großer Teil quer dazu ausgerichtet ist. Dadurch erfolgt gleichwertig ein Wärmetransport sowohl in Richtung der Achse 19 als auch von der Reiboberfläche weg.

In den Figuren 10A und 10B ist ein Formkörper 13 gezeigt, der aus einem zweidimensionalen Fasergewebe aufgebaut ist, das beispielsweise mit der Achse 19 als Zentrum gewickelt wurde. Wie die Figur 10A schematisch darstellt, enden die Fasem mit ihren Enden in der Reiboberfläche, so daß die an der Reiboberfläche erzeugte Wärme auf durch die definierte Ausrichtung der Fasern unter einem Winkel von 45 Grad zu der Achse 19, zu der gegenüberliegenden Seite abgeführt wird. Der Vorteil dieser Anordnung ist darin zu sehen, daß alle Fasern gleichzeitig in Richtung der Längsachse wie auch quer dazu die Wärme ableiten.

Die Figuren 11A und 11B zeigen einen Aufbau, bei dem im wesentlichen nur zu der Achse 19 parallele Fasern vorgesehen sind. Hierbei handelt es sich quasi um ein Faserbündel, in dem die gesamten Fasern parallel orientiert sind, so daß sie senkrecht zu der Reiboberfläche verlaufen.

Die Figuren 12A und 12B zeigen eine Variante mit einem äußeren Mantelbereich, mit dem Bezugszeichen 20 bezeichnet, und einem Kernbereich 21. In dem Kernbereich 21 sind die Fasern entsprechend der Figuren 11A und 11B parallel zu der Achse 19 ausgerichtet, während der Mantelbereich 20 entsprechend der Ausführungsform der Figuren 9A und 9B aus einem zweidimensionalen Gewebe aufgebaut ist. Mit diesem Aufbau des Formkörpers 14 wird ein abgestufter Wärmegradient zu der Achse 19 und von der Reibfläche 7 weg zu der gegenüberliegenden Seite erzeugt, so daß die Wärme definiert von der Reiboberfäche 7 und quer zur Längsachse 19 abgeführt wird.

Während die Figuren 1 bis 12 schematische Darstellungen von Bremsscheiben und Formkörpern zeigen, ist in den Figuren 13 und 14 eine in etwa maßstabsgetreue Bremsscheibe 1 mit einem einzelnen Reibkörper 5 dargestellt. Diese Bremsscheibe 1 besitzt eine zentrale Aufnahmeöffnung, die, entsprechend der Darstellung der Figur 1, mit dem Bezugszeichen 2 bezeichnet ist. Weiterhin sind nahe dem Rand der zentralen Öffnung 2 gleichmäßig verteilt Befestigungsbohrungen 15 zu sehen, mittels derer die Bremsscheibe an einer angetriebenen Einheit befestigt werden kann. Der Reibkörper 5 besitzt in einem gleichmäßigen Muster verteilt fünf Reihen von Formkörpern, entsprechend der Figur 1 mit dem Bezugszeichen 6 bezeichnet, wobei die Formkörper 6 der einzelnen Reihen jeweils in radialer Richtung versetzt zueinander angeordnet sind, so daß zwischen benachbarten Formkörpern 6 jeweils ein schmaler Steg des eigentlichen Reibkörpers 5 verbleibt. Diese Formkörper 6 können beispielsweise eine Querschnittform aufweisen, wie dies in Figur 6 dargestellt, wobei entsprechend Figur 14 bolzenartige Formkörper 6 vorgesehen sind, die über ihre axiale Länge einen gleichbleibenden Querschnitt besitzen. Diese Formkörper 6 haben wiederum eine bevorzugte Richtung eines Wärmetransports, der durch die Faserorientierung einer aus Kohlenstoffasern aufgebauten Bremsscheibe hervorgerufen wird, d.h. die Fasern der Formkörper 6 sind wiederum senkrecht zu der Reibfläche 7 verlaufend orientiert. Durch die feinverteilte Anordnung der einzelnen Formkörper 6 werden die Formkörper über die gesamte Reibfläche 7 verteilt, um die Wärme, die auf der Reibfläche 7 beim Bremsen hervorgerufen wird, in das Innere der Bremsscheibe abzuführen. Die Reibflächen 7, die nicht durch die Flächen der Formkörper 6 gebildet werden, können so ausgelegt werden, daß sie optimale Reibeigenschaften besitzen, während die Formkörper 6 so ausgelegt sind, daß sie einen optimalen Wärmeabstransport gewährleisten, indem sie Wärmesenken bilden. Eine derartige, aufwendige Struktur, wie sie in Figur 13 dargestellt ist, wird bevorzugt in Form eines Fasergrundgerüsts für den Reibkörper 5 gebildet, in den die einzelnen, bolzenartigen Formkörper 6 in Form von zweidimensionalen Gewebelagen analog Figur 9, die parallel zu den Oberflächennormalen der Reibfläche 7 verlaufen, eingebettet werden. Eine solche Kohlenstoff-Fasermatrix mit der definierten Orientierung der Fasern kann in Form eines Rohlings hergestellt werden, der anschließend, unter vorheriger Bildung einer definierten Mikrostruktur, mit flüssigem Silizium infiltriert wird, das dann mit freiem Kohlenstoff zu Karbid umgewandelt wird. Nach der Keramisierung ergibt sich eine hochfeste Kohlenstoffverbundanordnung, die sehr hohen Temperaturen gewachsen ist, darüberhinaus aber auch einen optimierten Wärmeabtransport von der Reiboberfläche weg mit sich bringt. Um eine solche Wärmeleitung von der Reibfläche 7 weg zusätzlich zu unterstützen, können in die Formkörper 6 gut wärmeleitfähige Einlagen vorgesehen werden, beispielsweise in Form von Metalldrähten oder Metallspänen, die allerdings nicht in den Figuren dargestellt sind.

Einzelne oder alle Formkörper 6, die in den Reibkörper 5 eingesetzt sind, können mit einer Durchgangsöffnung versehen werden, um zum einen einen zusätzlichen Kühleffekt zu erzielen, zum anderen aber auch Freiräume zu schaffen, durch die der auf der Reibfläche 7 erzeugte Abrieb abtransportiert werden kann.

Die Bremsscheibe 1, wie sie die Figuren 13 und 15 zeigt, weist einen Durchmesser 16 der zentralen Öffnung von etwa 160 mm auf, während der Außendurchmesser 17 etwa 330 mm beträgt. Die Dicke 22 der Bremsscheibe 1 bzw. des Reibkörpers 5 liegt bei etwa 30 bis 35 mm. Für den Durchmesser der Befestigungsbohrungen 15 wurden 10 mm gewählt. Der Durchmesser der bolzenartigen Formkörper 6 beträgt 13 mm, wobei insgesamt in den Reibkörper 160 solcher Bolzen 6 eingesetzt sind.

Die verschiedenen Formkörper 6, 13, 23 und 23', wie sie in der vorstehenden Beschreibung erläutert sind, sollen die Funktion erfüllen, eine in Richtung der Flächennormalen der Reibfläche höhere Wärmeleitung zu erzielen als das Material der Reibfläche selbst, um definiert die Wärme von der Reibfläche wegzuführen. Um einen solchen Effekt zu erzielen, bieten sich verschiedene Aufbauten für die Formkörper an, wie zum Beispiel Formkörper aus kohlenstoff-faserverstärktem Verbundwerkstoff, der Einbau von Metalleinlagen in die Formkörper, sowie Formkörper, deren Kohlenstoff-Fasern in Siliziumkarbid, das durch Flüssiginfiltration von Silizium und Reaktion mit Kohlenstoff gebildet wird, eingebettet sind. Eine weitere Möglichkeit ist eine massive Ausbildung der Formkörper aus Kohlenstoff, vorzugsweise aus Graphit, oder aus monolithischem, unverstärktem Material, vorzugsweise Siliziumkarbid bzw. gesintertem Siliziumkarbid oder aus mit Silizium infiltriertem Siliziumkarbid. Von den vorstehenden Materialien sollten monolitische Keramiken dann in einem gewissen Umfang für solche Formkörper eingesetzt werden, wenn zusätzlich eine Verschleißminderung angestrebt wird, während Formkörper, die wesentliche Anteile an Kohlenstoff, insbesondere an Graphit, enthalten, zur Geräuschdämpfung dienen; darüberhinaus sind Formkörper aus Graphit auch kostengünstig aufbaubar, und schließlich ist deren Wärmeleitfähigkeit sehr gut einstellbar, so daß der angestrebte Wärmegradient im Bereich der Formkörper erreicht wird. So können beispielsweise die Formkörper 6, wie sie in der Bremsscheibe der Figur 13 gezeigt sind, zum Teil solche sein, die aus Graphit gebildet sind, um diesen Geräuschdämpfungseffekt zu erzielen, während ein Teil aus monolitischen Keramiken gebildet sein kann, um einem Verschleiß entgegenzuwirken. Weiterhin kann durch definierte Anordnung der Formkörper 6 entsprechend der Ausführungsform der Figur 13 so, daß diese Formkörper Kanalwände bilden, ein Kühlkanalsystem aufgebaut werden, durch das definiert ein Kühlfluid, beispielsweise die Umgebungsluft, geführt wird.

## Patentansprüche

1. Reibeinheit, insbesondere Bremsscheibe, die mindestens eine Reibfläche aufweist, mit einem Reibkörper und mit mindestens einem Formkörper, wobei der Reibkörper aus kohlenstoff-faserverstärktem Verbundwerkstoff gebildet und fest mit dem Formkörper zusammengefügt ist, und wobei der mindestens eine Formkörper mit dem Reibkörper derart verbunden ist, daß mindestens ein Teil davon einen Bereich der Reibfläche bildet, dadurch gekennzeichnet, daß der (die) Formkörper (6; 13; 23; 23') eine in Richtung der Flächennormalen höhere Wärmeleitung aufweist (aufweisen) als die Reibfläche (7) selbst und aus massivem Kohlenstoff, monolitischer Keramik oder aus kohlenstoff-faserverstärktem Verbundwerkstoff bei dem mindestens 50% Kohlenstoff-Fasern des Formkörpers (6; 13; 23; 23') in ihrer Längsrichtung so ausgerichtet sind, daß sie mit der Flächennormalen der Reibflächen einen Winkel ≤ 45° einschließen, gebildet ist (sind).

2. Reibeinheit nach Anspruch 1, dadurch gekennzeichnet, daß die Kohlenstoff-Fasern im Reibkörper (5) im wesentlichen parallel zur Reibfläche (7) verlaufen.

3. Reibeinheit nach Anspruch 2, dadurch gekennzeichnet, daß der eingeschlossene Winkel <30° beträgt.

4. Reibeinheit nach Anspruch 3, dadurch gekennzeichnet, daß der eingeschlossene Winkel maximal 10° beträgt.

5. Reibeinheit nach Anspruch 4, dadurch gekennzeichnet, daß die Kohlenstoff-Fasern des Formkörpers nahezu parallel zur Flächennormalen der Reibfläche (7) verlaufen.

6. Reibeinheit nach einem der Ansprüche 1 bis 5, dadurch gekennzeichnet, daß der Anteil der ausgerichteten Kohlenstoff-Fasern des Formkörpers (6; 13; 23; 23') mehr als 75% beträgt.

7. Reibeinheit nach Anspruch 6, dadurch gekennzeichnet, daß der Anteil der ausgerichteten Kohlenstoff-Fasern des Formkörpers (6; 13; 23; 23') mehr als 90% beträgt.

8. Reibeinheit nach Anspruch 4 und Anspruch 7, dadurch gekennzeichnet, daß nahezu die gesamten Kohlenstoff-Fasern des Formkörpers (6; 13; 23; 23') parallel zueinander und in Richtung der Flächennormalen der Reibfläche (7) verlaufen.

9. Reibeinheit nach Anspruch 1, dadurch gekennzeichnet, daß der Formkörper (6; 13; 23; 23') den Reibkörper (5) in seiner gesamten Dicke durchdringt.

10. Reibeinheit nach Anspruch 1, dadurch gekennzeichnet, daß mehrere Formkörper (6; 13; 23; 23') vorgesehen sind, die zueinander beabstandet über den Reibkörper (5) verteilt sind.

11. Reibeinheit nach Anspruch 1, dadurch gekennzeichnet, daß die Formkörper (6; 23; 23') bolzenartig ausgebildet sind mit jeweils einer in der Reibfläche (7) endenden Stirnfläche.

12. Reibeinheit nach Anspruch 1, dadurch gekennzeichnet, daß die Formköper (13) bolzenartig ausgebildet sind mit jeweils über die Reiblfäche (7) hervorstehenden Stirnflächen.

13. Reibeinheit nach Anspruch 11 oder 12, dadurch gekennzeichnet, daß sich die Formkörper (6; 13; 23; 23') von der Reibfläche (7) zu der dieser gegenüberliegenden Fläche hin verjüngen.

14. Reibeinheit nach Anspruch 13, dadurch gekennzeichnet, daß die Formkörper (6; 13) als konisches Bauteil ausgebildet sind.

15. Reibeinheit nach Anspruch 13, dadurch gekennzeichnet, daß im Bereich der Verjüngung eine Anschlagfläche (10) gebildet ist.

16. Reibeinheit nach einem der Ansprüche 11 bis 15, dadurch gekennzeichnet, daß der Formkörper (6; 13; 23; 23') einen kreisförmigen Querschnitt aufweist.

17. Reibeinheit nach Anspruch 1, dadurch gekennzeichnet, daß der mindestens eine Formkörper (6; 13) über die der Reibfläche (7) gegenüberliegenden Fläche vorsteht und daß mit dem vorstehenden Teil ein weiterer Reibkörper (5) verbunden ist.

18. Reibeinheit nach Anspruch 17, dadurch gekennzeichnet, daß der Formkörper (6; 13) die beiden Reibkörper (5) einen Zwischenraum bildend beabstandet.

19. Reibeinheit nach Anspruch 18, dadurch gekennzeichnet, daß im Bereich (8) des Formkörpers (6; 13), der den Zwischenraum zwischen den beiden Reibkörpern (5) überbrückt, die Kohlenstoff-Fasern derart ausgerichtet sind, daß sie im wesentlichen in einer Ebene senkrecht zur Faserlängsrichtung der an die Reibfläche (7) angrenzenden Schicht verlaufen und in Richtung einer Kühlströmung (11) verlaufend ausgerichtet sind.

20. Reibeinheit nach Anspruch 18, dadurch gekennzeichnet, daß Formkörper (23) in den Zwischenraum hineinragen und mit Abstand zu dem jeweils gegenüberliegenden Reibkörper (5) enden.

21. Reibeinheit nach einem der Ansprüche 1 bis 19, dadurch gekennzeichnet, daß die Formkörper (23) als Hohlkörper ausgebildet sind.

22. Reibeinheit nach einem der Ansprüche 1 bis 21, dadurch gekennzeichnet, daß der Formkörper (6; 13; 23; 23') mindestens eine Metalleinlage aufweist, die sich in einer an die Reibfläche angrenzenden Schicht im wesentlichen senkrecht zur Reibfläche erstreckt.

23. Reibeinheit nach Anspruch 22, dadurch gekennzeichnet, daß die mindestens eine Metalleinlage so ausgerichtet ist, daß sie im wesentlichen parallel zu den Kohlenstoff-Fasern des Formkörpers verläuft.

24. Reibeinheit nach einem der Ansprüche 1 bis 22, dadurch gekennzeichnet, daß die mindestens 50% der Kohlenstoff-Fasern des Formkörpers (6; 13; 23; 23') eine höhere Wärmeleitfähigkeit aufweisen als die Kohlenstoff-Fasern des Reibkörpers (5).

25. Reibkörper nach Anspruch 24, dadurch gekennzeichnet, daß die mindestens 50% Kohlenstoff-Fasern des Formkörpers (6; 13; 23; 23') Hoch-Modul-Fasern mit einem Zug-E-Modul > 300 GPa sind.

26. Reibeinheit nach einem der Ansprüche 1 bis 25, dadurch gekennzeichnet, daß die Kohlenstoff-Fasern des Reibköpers (5) und/oder die des Formkörpers (6; 13; 23) in Siliziumkarbid eingebettet sind, das durch Flüssiginfiltration von Silizium und Reaktion mit Kohlenstoff gebildet ist.

27. Reibeinheit nach Anspruch 1, dadurch gekennzeichnet, daß der (die) Formkörper (6; 13; 23, 23') aus aus Graphit gebildet ist (sind).

28. Reibeinheit nach Anspruch 1, dadurch gekennzeichnet, daß der (die) Formkörper (6; 13; 23, 23') aus Siliziumkarbid oder gesintertem Siliziumkarbid gebildet ist (sind).

29. Reibeinheit nach Anspruch 11, dadurch gekennzeichnet, daß die Summe der in der Reibfläche (7) endenden Stirnflächen etwa 30 bis 50% der Gesamtfläche der Reibfläche ergibt (Figur 13).

30. Reibeinheit nach Anspruch 29, dadurch gekennzeichnet, daß der Durchmesser der in der Reibfläche endenden Stirnfläche zwischen 10 und 20 mm, vorzugsweise zwischen 12 und 14 mm, beträgt.

31. Reibeinheit nach Anspruch 17, dadurch gekennzeichnet, daß die Anzahl der Formkörper, deren Form und Positionierung so gewählt sind, daß durch die Formkörper eine Kühlkanalstruktur gebildet wird.

32. Reibeinheit nach einem der Ansprüche 1 bis 31, dadurch gekennzeichnet, daß die Formkörper (6; 13; 23, 23') Halteteile und/oder Krafteinleitungselemente bilden.

33. Reibeinheit nach einem der Ansprüche 1 bis 32, dadurch gekennzeichnet, daß die Formkörper (6; 13; 23, 23') über die Oberseite des jeweiligen Reibkörpers (5) vorstehen und die Stirnflächen der Formkörper (23, 23') Reibflächen bilden.

## Claims

1. Friction unit, in particular brake disk, comprising at least a plane of friction, with a friction body and with at least a molded body, wherein the friction body is formed of carbon-fiber reinforced composite material and is strongly joined together with the molded body, and wherein at least the one molded body is connected with the friction body in such a manner, that at least a part thereof forming an area of plane of friction, characterized in that the molded body (molded bodies) (6; 13; 23; 23') comprising a heat conducting in direction of the normal line of its surface greater than the plane of friction (7) itself, and is (are) made of massive carbon matter, monolithic ceramic or carbon fiber reinforced composite material characterized in that at least 50% of the carbon fibres of the molded body (6; 13; 23; 23') are arranged in the longitudinal direction so as to encompass an angle with the normal line of the planes of friction ≤ 45°.

2. A friction unit according to claim 1, characterized in that the carbon fibers in the friction body (5) essentially run parallel to the plane of friction (7).

3. A friction unit according to claim 2, characterized in that the encompassed angle is < 30°.

4. A friction unit according to claim 3, characterized in that the encompassed angle is 10° at maximum.

5. A friction unit according to claim 4, characterized in that the carbon fibers of the molded body run in substantially parallel to the normal line of the plane friction (7).

6. A friction unit according to one of the claims 1 to 5, characterized in that the portion of the oriented carbon fibers of the molded bodies (6; 13; 23; 23') amounts to more than 75%.

7. A friction unit according to claim 6, characterized in that the portion of the oriented carbon fibers of the molded bodies (6; 13; 23; 23') amounts to more than 90%.

8. A friction unit according to claim 4 and claim 7, characterized in that approximately the total carbon fibers of the molded body (6; 13; 23; 23') run parallel to each other and in the direction of the normal line of the plane of friction (7).

9. A friction unit according to claim 1, characterized in that the molded body (6; 13; 23; 23) penetrates the friction body (5) through its entire thickness.

10. A friction unit according to claim 1, characterized in that several molded bodies (6; 13; 23; 23') are provided separated to each other with distance throughout the friction body (5).

11. A friction unit according to claim 1, characterized in that the molded bodies (6; 23; 23') are formed as bolt-like bodies each made with a frontal surface laying flush with the plane of friction (7).

12. A friction unit according to claim 1, characterized in that the molded bodies (13) are formed as bolt-like bodies each made with a frontal surface protruding over the plane of friction (7).

13. A friction unit according to one of claims 11 or 12, characterized in that the molded bodies (6; 13; 23; 23') tapering from the plane of friction (7) to the surface lying opposite thereof.

14. A friction unit according to claim 13, characterized in that the molded bodies (6; 13) are formed as conical structural elements.

15. A friction unit according to claim 13, characterized in that characterized in that a stopping face (10) is formed on the taper.

16. A friction unit according to one of claims 11 through 15, characterized in that the molded bodies (6; 13; 23; 23') comprise a circular cross section.

17. A friction unit according to claim 1, characterized in that at least the one molded body (6; 13) protrudes over the plane which is located opposite by the plane of friction and in which an additional friction body (5) is attached on the protruding part.

18. A friction unit according to claim 17, characterized in that the molded body (6; 13) is spacing the both friction bodies (5) such as to create a space there between.

19. A friction unit according to claim 18, characterized in that in the area (8) of the molded body (6; 13), which bridges the space between the both friction bodies (5), the carbon fibers are oriented in such a way, that they essentially run in a plane perpendicular to the longitudinal direction to the fibers which run along the bordering layer of the plane of friction (7) and which are oriented in the direction of a cooling stream (11).

20. A friction unit according to claim 18, characterized in that molded bodies (23) project in the space and end in distance to the opposite friction body (5).

21. A friction unit according to claims 1 to 19, characterized in that the molded bodies (23) are made as hollow elements.

22. A friction unit according to claims 1 to 21, characterized in that the molded bodies (6; 13; 23; 23') include at least a metal inlay in a layer extruding next to the plane of friction and in substantially perpendicular to the plane of the friction.

23. A friction unit according to claim 22, characterized in that the at least one metal inlay is oriented in such way that it essentially runs parallel to the carbon fibers of the molded body.

24. A friction unit according to one of the claims 1 to 22, characterized in that at least 50% of the carbon fibers of the molded body (6; 13; 23; 23') has a higher heat conductive capability than the carbon fibers of the friction body (5).

25. A friction unit according to claim 24, characterized in that the at least 50% of the carbon fibers of the molded body (6; 13; 23; 23') are High Module Fibers with a Young's-E-Modulus > 300 GPa.

26. A friction unit according to one of the claims 1 to 25, characterized in that the carbon fibers of the friction body (5) and/or of the molded body (6; 13; 23; 23') are embedded in silicon carbide, which is formed by infiltration of liquid silicon under reaction with carbon.

27. A friction unit according to claim 1, characterized in that the molded body (bodies) (6; 13; 23; 23') is (are) made of graphite.

28. A friction unit according to claim 1, characterized in that the molded body (bodies) (6; 13; 23; 23') is (are) made of silicon carbide or sintered silicon carbide,

29. A friction unit according to claim 11, characterized in that the sum of frontal surfaces in the plane of friction (7) corresponds to approximately 30 to 50% of the total surface of the plane friction (figure 13).

30. A friction unit according to claim 29, characterized in that the diameter of the frontal surface ending in the plane of friction is between 10 and 20 mm, preferably between 12 and 14 mm.

31. A friction unit according to claim 17, characterized in that the number of molded bodies and the shape and position thereof have been selected in a way to form a cooling channel structure through the molded bodies.

32. A friction unit according to one of the claims 1 to 31, characterized in that the molded bodies (6; 13, 23; 23') form support parts and/or force introducing elements.

33. A friction unit according to one of the claims 1 to 32, characterized in that the molded bodies (6; 13; 23; 23') protrude over the surface of the respective friction body (5) and characterized in that the frontal surfaces of the molded bodies (23; 23') form planes of friction.

## Revendications

1. Unité de friction, en particulier disque à frein qui présente au moins une surface de friction avec un corps de friction et au moins un corps moulé, le corps de friction étant réalisé en matériau composite renforcé aux fibres de carbone et étant assemblé de manière solidaire au corps moulé et au moins un corps moulé étant relié au corps de friction de manière qu'au moins une partie forme la zone de la surface de friction, caractérisée en ce que le (les) corps moulé(s) (6 ; 13 ; 23 ; 23') présente(nt) une conductibilité thermique dans le sens de la normale de surface supérieure à celle de la surface de friction (7) elle-même, et qu'il(s) est (sont) réalisé(s) en oxyde de carbone massif, en céramique monolithique ou en composite renforcé aux fibres de carbone, où au moins 50 % des fibres de carbone du corps moulé (6 ; 13 ; 23 ; 23') sont orientées dans leurs direction longitudinale de telle sorte qu'elles forment avec la normale des surfaces de friction un angle ≤ 45°.

2. Unité de friction selon la revendication 1, caractérisée en ce que les fibres de carbone s'étendent dans le corps de friction (5) sensiblement parallèlement à la surface de friction (7).

3. Unité de friction selon la revendication 2, caractérisée en ce que l'angle formé est inférieur ou égal < 30°.

4. Unité de friction selon la revendication 3, caractérisée en ce que l'angle formé est inférieur ou égal à 10° maximum

5. Unité de friction selon la revendication 4, caractérisée en ce que les fibres de carbone du corps moulé s'étendent presque parallèlement aux normales de la surface de friction (7).

6. Unité de friction selon l'une des revendications 1 à 5, caractérisée en ce que la part des fibres de carbone orientées du corps moulé (6 ; 13 ; 23 ; 23') est de plus 75 %.

7. Unité de friction selon la revendication 6, caractérisée en ce que la part des fibres de carbone orientées du corps moulé (6 ; 13 ; 23 ; 23') est de plus de 90 %.

8. Unité de friction selon la revendication 4 et la revendication 7, caractérisée en ce que pratiquement l'ensemble des fibres de carbone du corps moulé (6 ; 13 ; 23 ; 23') s'étendent parallèlement entre eux et en direction des normales de la surface de friction (7).

9. Unité de friction selon la revendication 1, caractérisée en ce que le corps moulé (6 ; 13 ; 23 ; 23') traverse le corps de friction (5), dans toute son épaisseur.

10. Unité de friction selon la revendication 1, caractérisée en ce que plusieurs corps moulés (6 ; 13 ; 23 ; 23') sont prévus qui sont répartis sur le corps de friction (5) à distance les uns des autres.

11. Unité de friction selon la revendication 1, caractérisée en ce que les corps moulés (6 ; 23 ; 23') ont la forme de boulons avec une surface frontale dépassant de la surface de friction (7).

12. Unité de friction selon la revendication 1, caractérisée en ce que les corps moulés (13) ont la forme de boulons avec des surfaces frontales dépassant de la surface de friction (7).

13. Unité de friction selon la revendication 11 ou 12, caractérisée en ce que les corps moulés (6 ; 13 ; 23 ; 23') diminuent en cône depuis la surface de friction (7) en direction de l surface opposée à cette dernière.

14. Unité de friction selon la revendication 13, caractérisée en ce que les corps moulés (6 ; 13) ont une forme de composant conique.

15. Unité de friction selon la revendication 13, caractérisée en ce que dans la zone du rétrécissement est formée une surface de butée (10).

16. Unité de friction selon l'une des revendications 11 à 15, caractérisée en ce que le corps moulés (6 ; 13 ; 23 ; 23') présente une section transversale circulaire.

17. Unité de friction selon la revendication 1, caractérisée en ce qu'au moins un corps moulés (6 ; 13) fait saillie au-dessus de la surface opposée à la surface de friction (7) et en ce qu'un autre corps de friction (5) est relié à la partie saillante.

18. Unité de friction selon la revendication 17, caractérisée en ce que le corps moulés 6 ; 13) maintient à distance les deux corps de friction (5) en créant un espace intermédiaire.

19. Unité de friction selon la revendication 18, caractérisée en ce que dans la zone (8) du corps moulés (6, 13), qui franchit l'espace intermédiaire entre les deux corps de friction (5), les fibres de carbone sont orientées de sorte qu'elles s'étendent sensiblement dans un plan perpendiculairement à la direction longitudinale des fibres de la couche attenante à la surface de friction (7) et sont orientées en direction d'un courant de refroidissement (11).

20. Unité de friction selon la revendication 18, caractérisée en ce que des corps moulés (23) s'engagent dans l'espace intermédiaire et se terminent à distance des corps de friction (5) opposés.

21. Unité de friction selon l'une des revendications 1 à 19, caractérisée en ce que des corps moulés (23) ont la forme de corps creux.

22. Unité de friction selon l'une des revendications 1 à 21, caractérisée en ce que le corps moulés (6 ; 13 ; 23 ; 23') présente au moins une garniture métallique qui s'étend dans une couche attenante à la surface de friction sensiblement perpendiculairement à la surface de friction.

23. Unité de friction selon la revendication 22, caractérisée en ce que au moins une garniture métallique est orientée de manière qu'elle s'étende sensiblement parallèlement aux fibres de carbone du corps moulés.

24. Unité de friction selon l'une des revendications 1 à 22, caractérisée en ce qu'au moins 50 % des fibres de carbone du corps moulés (6 ; 13 ; 23 ; 23') présentent une conductibilité thermique supérieure à celle des fibres de carbone du corps de friction (5).

25. Unité de friction selon la revendication 24, caractérisée en ce qu'au moins 50 % des fibres de carbone du corps moulés (6 ; 13 ; 23 ; 23') sont des fibres à haut module avec un module de traction E supérieur à 300 GPa.

26. Unité de friction selon l'une des revendications 1 à 25, caractérisée en ce que les fibres de carbone du corps de friction (5) et/ou ceux du corps moulé (6 ; 13 ; 23) sont enrobés dans du carbure de silicium qui est formé par des infiltrations liquides de silicium et en réaction avec le carbone.

27. Unité de friction selon la revendication 1, caractérisée en ce que le (les) corps moulé(s) (6 ; 13 ; 23 ; 23') est (sont) composé(s) de graphite.

28. Unité de friction selon la revendication 1, caractérisée en ce que le (les) corps moulé(s) (6 ; 13 ; 23 ; 23') est (sont) composé(s) de carbure de silicium ou de carbure de silicium fritté.

29. Unité de friction selon la revendication 11, caractérisée en ce que la somme des surfaces frontales se terminant dans 1 surface de friction (7) donne environ 30 à 50 % de la surface totale de la surface de friction (Figure 13).

30. Unité de friction selon la revendication 29, caractérisée en ce que le diamètre de la surface frontale se terminant dans la surface de friction est compris entre 10 et 20 mm, de préférence entre 12 et 14 mm.

31. Unité de friction selon la revendication 17, caractérisée en ce que le nombre des corps moulés dont la forme et le positionnement sont sélectionnés de sorte que les corps moulés forment une structure de canaux de refroidissement.

32. Unité de friction selon l'une des revendications 1 à 31, caractérisée en ce que les corps moulés (6 ; 13 ; 23 ; 23') forment des pièces de retenue et/ou des éléments d'introduction de force.

33. Unité de friction selon l'une des revendications 1 à 32, caractérisée en ce que les corps moulés (6 ; 13 ; 23 ; 23') font saillie au-dessus de la surface supérieure du corps de friction respectif (5) et les surfaces frontales des corps moulés (23, 23') forment des surfaces de friction.
